(19) Europäisches Patentamt
European Patent Office
Office européen des brevets

(11) **EP 1 162 499 A1**

(12) **DEMANDE DE BREVET EUROPEEN**

(43) Date de publication:
**12.12.2001 Bulletin 2001/50**

(51) Int Cl.⁷: **G03B 21/56**, G03B 21/58

(21) Numéro de dépôt: **01401486.4**

(22) Date de dépôt: **08.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **08.06.2000 FR 0007372**

(71) Demandeur: **Avance Engineering**
**75015 Paris (FR)**

(72) Inventeur: **Congard, Patrice**
**75020 Paris (FR)**

(74) Mandataire: **Rinuy, Santarelli**
**14, avenue de la Grande Armée,**
**B.P. 237**
**75822 Paris Cédex 17 (FR)**

(54) **Ecran de projection de type rétractable**

(57)     Un écran de projection de type rétractable comporte au moins deux couches de tissu blanc transparent aux ondes acoustiques superposées et jointives.
     De manière préférée, il comporte une barre de lestage (23) apte à tendre les deux couches de tissu de manière suffisante pour compenser les différences de longueur de tissu se formant lorsqu'elles sont enroulées sur des moyens d'enroulement par différence de diamètre entre une couche dite intérieure et une couche dite extérieure qui la recouvre sur lesdits moyens d'enroulement.

Fig. 4

**Description**

La présente invention concerne un écran de projection du genre escamotable, et destiné à être utilisé en position déployée en combinaison avec un projecteur, notamment vidéo, et avec un dispositif de diffusion sonore.

Plus précisément, un écran selon la présente invention est escamoté lorsqu'on ne l'utilise pas, afin de réduire son encombrement, d'une part, et d'éviter des risques de salissure et/ou de détérioration, d'autre part.

De plus, un écran selon la présente invention est de type dit trans-sonore, c'est à dire qu'il est perméable aux ondes sonores.

Ceci permet la mise en oeuvre simultanée de la projection vidéo avec une diffusion sonore réalisée à partir de sources sonores appropriés placées derrière l'écran trans-sonore.

L'avantage du placement des sources sonores derrière l'écran est connu depuis l'existence du cinématographe sonorisé, dit "parlant". Il est de procurer au spectateur une sensation de cohérence entre l'image projetée et le son diffusé.

La mise en oeuvre simultanée de sources sonores et d'un écran vidéo trans-sonore permet de reproduire cette sensation dans un environnement plus petit, notamment domestique.

On connaît des écrans vidéo réunissant les caractéristiques mentionnées ci-dessus.

Traditionnellement, de tels écrans sont réalisés à partir d'une feuille de matériau plastique, généralement du PVC, perforée d'orifices de petite taille destinés à laisser passer les ondes sonores.

De tels écrans sont réalisé à partir d'une telle feuille de PVC dont les perforations représentent typiquement entre 2% et 6% de leur surface et ne laissent passer le son que très imparfaitement. Une grande partie de l'onde sonore est réfléchie, au lieu de traverser les orifices perforant l'écran. Ce phénomène provoque une atténuation importante du niveau sonore , en particulier aux fréquences élevées. Par ailleurs, les réflections multiples engendrées initialement par les portions pleines de l'écran provoquent des aberrations dans la réponse acoustique, se traduisant par des irrégularités de la fonction de transfert et des distorsions nuisant à la qualité du son.

De plus, dans un environnement plus réduit que celui d'une salle de cinématographe classique, le spectateur est normalement placé bien plus près de l'écran. Les perforations de l'écran, en deçà d'une certaine distance, deviennent visibles, et ajoutent à l'image un effet de trame qui est gênant.

De tels écrans sont en général rétractables par enroulement sur un cylindre entraîné en rotation par un moteur, et cette opération fréquemment répétée entraîne la déformation soit des bords de l'écran, soit de la partie médiane. Ceci vient du fait que les écrans enroulables ne sont généralement pas tendus par les bords, mais uniquement par une barre de lestage horizontale, qui applique une force de traction verticale à l'écran, vers le bas.

Avec le temps le matériau constituant l'écran peut s'étirer de façon hétérogène, provoquant ainsi des déformations mettant en cause la planéité de l'écran. Outre les inconvénients esthétiques que celà implique, la mise au point du projecteur s'en trouve faussée, ce qui altère la qualité de l'image dans certaines zones.

Ce défaut se trouve souvent encore accru si l'on utilise des écrans trans-sonores, munis de perforations.

Il existe bien des dispositifs de tension des bords d'écrans enroulables, mais ils sont généralement à la fois coûteux, inesthétiques et peuvent, à l'usage, se gripper.

La présente invention a pour objet un écran trans-sonore escamotable exempt des inconvénients mentionnés ci-dessus.

Plus précisément, la présente invention concerne un écran de projection transparent aux ondes acoustiques de type rétractable, caractérisé en ce qu'il comporte au moins deux couches de tissu blanc superposées et jointives.

Selon un premier mode de réalisation de l'invention, l'écran constitué de deux couches de tissu superposées est enroulé sur des moyens d'enroulement, ladite barre de lestage étant d'un poids suffisant pour étirer le tissu de manière que cet étirement compense la différence de diamètre entre les deux couches lorsqu'elles sont enroulées .

Ceci permet d'éviter la formation d'un pli à la couche de tissu intérieure, lorsque l'écran est enroulé.

Selon un second mode de réalisation de l'invention, l'écran se replie en une pluralité de rectangles reliés par des plis lorsque la barre de lestage remonte sous l'effet de moyens de traction qui y sont appliqués.

Selon un troisième mode de réalisation de l'invention, un tissu formant écran est fixé par un bord définissant une première extrémité, une extrémité opposée étant fixée à un moyen d'enroulement comprenant un rouleau disposé de manière fixe parallèlement à ladite première extrémité, un rouleau mobile servant de barre de lestage étant interposé entre les deux extrémités de manière à tendre le tissu vers le bas par gravité, ledit rouleau étant solidaire de moyens de serrage tendant à mettre en contact deux couches du tissu qui se trouvent ainsi accolées.

De préférence, il est prévu que les moyens d'enroulement comportent des moyens permettant l'escamotage simultané d'un dispositif de diffusion sonore de manière que ledit dispositif se trouve sensiblement à mi-hauteur et derrière l'écran lorsque celui-ci est en position déployée.

On comprendra mieux les particularités et avantages de la présente invention à la lecture de la description détaillée suivante, en référence aux dessins annexés dans lesquels:

La Fig. 1 est un vue en élévation frontale d'un écran enroulable traditionnel en position déroulée,

La Fig. 2 est une vue en coupe latérale d'un écran enroulable traditionnel en position déroulée,

La Fig. 3 est une vue en élévation frontale d'un premier mode de réalisation de l'invention, l'écran étant en position déroulée,

La Fig. 4 est une vue en coupe latérale d'un premier mode de réalisation de l'invention, l'écran étant en position déroulée,

La Fig.5 est une vue en coupe latérale d'un écran selon un deuxième mode de réalisation de l'invention,

La Fig. 6 est une vue en élévation frontale d'un écran selon un deuxième mode de réalisation de l'invention,

La Fig. 7 représente en détail d'un bord latéral d'un écran selon le deuxième mode de réalisation de l'invention,

La Fig. 8 est une vue schématique en coupe latérale d'un troisième mode de réalisation de l'invention, l'écran étant en position partiellement escamotée,

La Fig. 9 est une vue de détail en coupe latérale d'un troisième mode de réalisation de l'invention, et

La Fig. 10 est une vue en schématique en élévation latérale d'un mode de réalisation d'un écran selon l'invention associé à un dispositif de diffusion sonore rétractable.

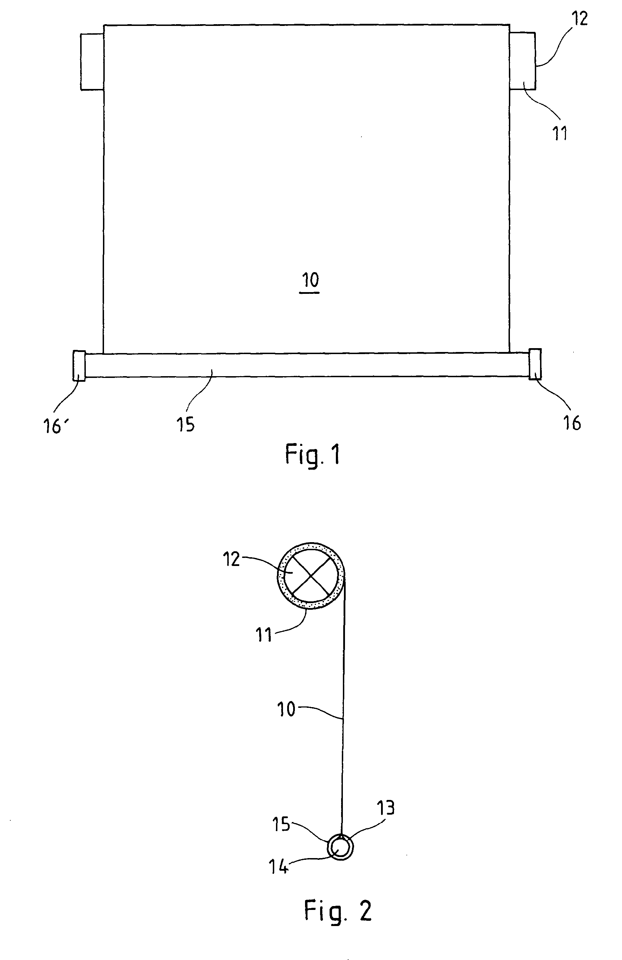

Plus en détail, un écran escamotable classique de type enroulable, tel que représenté aux figures 1 et 2, comporte une bande de matériau de couleur blanche 10 de largeur sensiblement constante, enroulée sur un rouleau 11 commandé en rotation par un moteur à rotation axiale 12. La bande 10 comporte une extrémité libre 13 qui est repliée et fixée de manière à constituer un ourlet dans lequel est disposée une barre de lestage 14. Un tube fendu 15 entoure l'ourlet lesté. Deux bouchons démontables 16, 16' sont généralement prévus pour fermer le tube fendu 15 afin d'éviter tout déplacement axial de la barre de lestage dans l'ourlet.

Le moteur 12 est généralement du type à fin de course réglable, un inverseur étant prévu pour changer son sens de rotation.

Lorsque le moteur est actionné, il entraîne en rotation le rouleau 11 qui enroule ou déroule la bande 10 suivant le sens de la rotation.

Lorsque la bande est déroulée, le moteur 12 s'arrête en fin de course dans une position prédéterminée par le réglage. Elle est tendue par la force de gravité qui s'exerce sur la barre de lestage 14.

Lorsque l'on remet en marche le moteur, l'inverseur inverse le sens de rotation de celui-ci, ce qui enroule la bande 10 autour du rouleau 11 jusqu'à l'action du dispositif de fin de course, réglé de manière à interrompre l'action du moteur quand la bande est suffisamment enroulée sur le rouleau 11.

La bande 10 est généralement constituée d'un matériau opaque, blanc, et réfléchissant la lumière, ce qui permet son utilisation comme écran de projection pour des applications cinématographiques, photographiques, informatiques ou vidéo.

Dans les applications nécessitant une diffusion sonore simultanée à l'image, on préfère généralement disposer une source sonore (non représentée) derrière l'écran. Les ondes sonores émises par la source sonore , généralement un haut-parleur, traversent la bande 10, généralement constituée d'une feuille de matériau plastique, qui est perforée d'une multitude d'orifices prévus à cet effet.

De tels orifices ont un diamètre généralement compris entre 0,5 mm et 1,5 mm. Leur surface totale représente typiquement entre 2% et 6% de la surface totale de l'écran.

Cette proportion de surface perforée est insuffisante pour permettre une transmission correcte du son, une proportion d'au moins 40% étant nécessaire.

Une surface perforée de 40% ou plus de la surface de l'écran est incompatible avec des performances acceptables en projection cinématographique ou vidéo.

On connaît par ailleurs l'usage de tissus pour la réalisation d'écrans de projection. Ceux-ci présentent l'avantage, dans certaines textures, d'être perméables aux ondes sonores.

L'inconvénient des tissus suffisamment perméables aux ondes sonores est leur manque d'opacité à la lumière, entraînant une perte de luminosité des images projetées. De plus, le manque d'opacité de tels tissus peut occasionner l'apparence d'un reflet perceptible sur l'écran, parasitant l'image projetée, lorsqu'une surface située derrière l'écran réfléchit la lumière.

Si on peut envisager d'améliorer l'opacité d'un écran en tissu perméable au son en reserrant le tissage, donc en augmentant sa densité, on réduit d'autant le perméabilité au son.

L'inventeur a observé que, de manière surprenante, il était possible de concilier une perméabilité suffisante au son avec une opacité satisfaisante à la lumière en substituant à un tissu de densité x, insuffisamment perméable au son, deux couches jointives de densité x/2 du même tissu dont la perméabilité globale aux ondes sonores s'avère bien supérieure à cele du tissu de densité x.

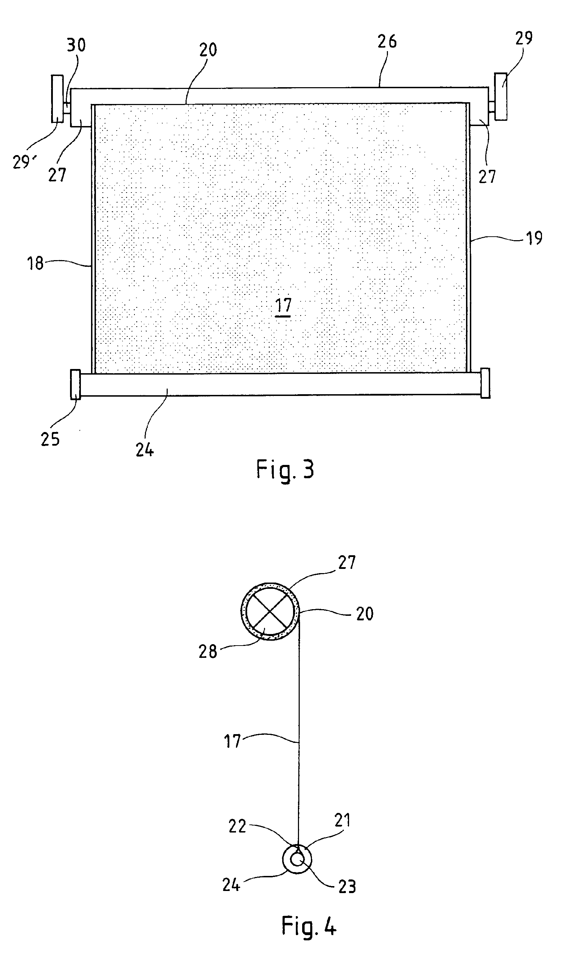

Un écran de projection suivant l'invention, tel que représenté aux Figs. 3 à 10 est exempt des inconvénients et limitations mentionnés ci-dessus, concernant les écrans trans-sonores enroulables traditionnels.

Suivant un premier mode de réalisation de l'invention, tel que représenté aux Figs.3 et 4, un écran de projection 17 est constitué de deux épaisseurs d'un lai de tissu blanc, perméable à l'air. De préférence, et de manière non limitative, on utilisera du tissu comportant 30 à 80 fils en chaîne et 20 à 40 duites en trame, par centimètre carré.

De préférence, et de manière non limitative, la masse du tissu par unité de surface sera comprise entre 150 et 200 grammes par mètre carré. Ces deux épaisseurs, de même dimensions et de forme rectangulaire, peuvent être cousues ensemble.

Il est également possible de replier le tissu sur lui-même en deux épaisseurs, et de coudre les bords latéraux ensemble d'une part, et les deux extrémités du lai ensemble d'autre part.

L'ensemble constitue l'écran comportant deux coutures latérales apparentes 18,19, une extrémité dite d'enroulement 20, et une extrémité opposée dite de lestage 21 (Fig.4).

L'extrémité 21 comporte , de manière non limitative, un ourlet ouvert à ses deux extrémités, réalisé classiquement par une couture 22.

Une barre de lestage 23, constituée par exemple d'une tige d'acier plein, est disposée dans l'ourlet de l'extrémité 21. De préférence, la longueur de la barre de lestage 23 est peu différente de la largeur de l'écran 17 de manière que la tension mécanique due à la masse de la barre soit répartie de façon homogène sur toute la largeur de l'écran.

La masse de la barre de lestage 23 sera proportionnelle à la surface de l'écran, et de préférence au moins égale à 3 kilogrammes par mètre carré de surface d'écran.

La masse maximale de la barre sera déterminée de manière à éviter le déchirement du tissu autour de la couture 22 .

L'ensemble constitué par l'extrémité 21 de l'écran et la barre de lestage 23 disposée à l'intérieur de l'ourlet est lui-même disposé à l'intérieur d'un tube rigide 24 fendu sur l'intégralité de sa longueur.

Sa longueur est au moins égale à la largeur de l'écran 17. L'écran 17 est disposé de manière à passer par la fente du tube 24. Deux bouchons 25 obturent respectivement les extrémités de ce tube, pour éviter des déplacements axiaux de la barre de lestage et/ou de l'ourlet 21 dans le tube 24.

L'extrémité d'enroulement 20 de l'écran 17 est fixée par des moyens appropriés à des moyens d'enroulement comprenant par exemple un rouleau 27 solidaire en rotation de la face extérieure d'un moteur d'entrainement de forme globalement cylindrique 28 (représenté symboliquement par une croix, Fig.4) disposé axialement à l'intérieur du rouleau 27. Le moteur 28 comporte un axe solidaire d'un support fixe 29 (Fig.3).

Le moteur 28 est apte à entraîner en rotation le rouleau 27 dans l'un ou l'autre sens, suivant l'état d'un dispositif de commande (non représenté). Un dispositif de fin de course est prévu de manière à interrompre le fonctionnement du moteur dès qu'un nombre de tours déterminé a été effectué.

Le dispositif de fin de course comporte un inverseur apte à inverser l'état de la commande du moteur simultanément à l'interruption de son fonctionnement.

Le rouleau 27 comporte un axe 30 qui lui est accouplé en rotation, dont une extrémité en saillie axiale du rouleau 27 est supportée par un support fixe 29' comportant, par exemple, un pallier.

De tels moyens d'entraînement sont connus en soi, notamment dans des dispositifs de relevage automatique de stores, et ne constituent pas une particularité de l'invention.

Lorsque le dispositif de commande est actionné, le moteur 28 entraîne le rouleau 27 en rotation, ce qui enroule l'écran 17 sur le rouleau.

La barre de lestage 23 tend simultanément les deux couches de l'écran 27. L'enroulement de l'écran sur le rouleau définit une couche intérieure et une couche extérieure dont le rayon excède celui de la couche intérieur d'une épaisseur de tissu.

A chaque tour enroulé, la différence de longueur entre les deux couches est donc :

$$2\Pi e,$$

e étant l'épaisseur du tissu.

La barre de lestage 23 exerce, par sa masse, une tension suffisante pour étirer la couche extérieure de tissu de manière que sa déformation élastique soit au moins égale à la différence de longueur entre les deux couches.

Ceci évite qu'il se forme des plis en rattrapage de la différence de longueur entre les deux couches, provoquant l'apparition de marques visibles sur l'écran et une usure prématurée autour de ces plis.

De plus, la tension exercée par la barre de lestage 23, du fait de l'élasticité du tissu, rattrape les éventuelles déformations non élastiques pouvant intervenir dans différentes parties de l'écran 17, et procure une planéité de l'écran en position déroulée permettant une projection d'image satisfaisante.

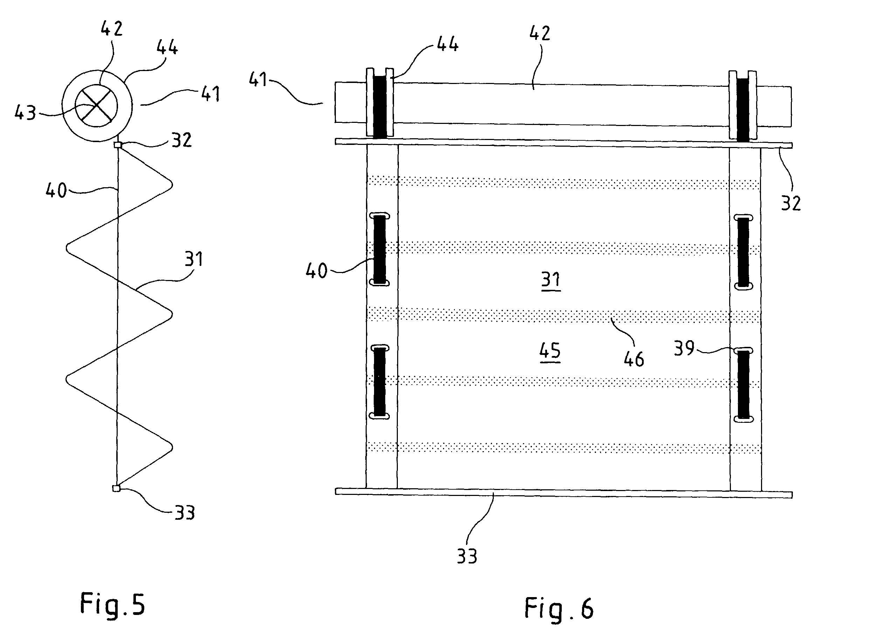

Un deuxième mode de réalisation de l'invention est représenté aux Figs. 5 à 7. Un écran 31 comportant deux couches de tissu est fixé par un bord dit supérieur, à l'aide de moyens connus en soi à une barre de fixation haute 32 qui est solidaire d'un bâti (non représenté).

L'écran 31 est également fixé par son bord opposé dit inférieur à une barre de lestage 33.

Les deux bords 34 et 34', dits latéraux , de l'écran 31 comportent chacun un ourlet cousu 35 et 35' respectivement.

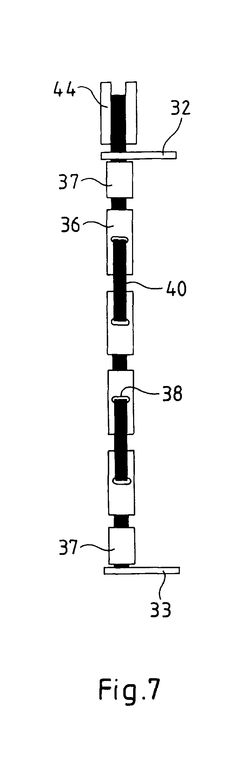

À l'intérieur de chacun de ces ourlets est prévu une pluralité d'éléments 36 rigides plats et oblongs (Fig. 7) disposés en alignement et de manière non jointive.

Tous les éléments 36 sont identiques, et quatre éléments 37, identiques entre eux et de longueur sensiblement égale à la moitié de celle d'un élément 36 sont disposés respectivement à chacune des extrémités des deux alignements d'éléments 36.

Les éléments 36 et 37 sont disposés à l'intérieur des ourlets et sont espacés à intervalles égaux.

On peut, en variante d'exécution, connecter les éléments 36 et les éléments 37 entre eux par une bande souple ou semi-rigide (non représentée) de largeur sensiblement égale à celles des éléments 36 et 37.

Les éléments 36 sont percés en leur centre d'un orifice oblong 38, dont l'axe est perpendiculaire à celui de l'élément 36.

Les ourlets comportent plusieurs découpes oblongues 39, cousues ou rivetées, qui correspondent en se superposant chacun respectivement à l'un des orifices 38 prévus dans les éléments 36.

Deux sangles 40 sont prévues, passant dans chacun des ourlets par les orifices 38 et découpes 39 alternativement devant et derrière l'écran 30.

Une extrémité dite basse de chaque sangle 40 est reliée à la barre de lestage 33, l'autre extrémité dite haute étant fixée de manière à pouvoir être enroulée par des moyens d'enroulement.

Deux encoches (non représentées) sont prévues dans la barre de fixation haute 32 pour permettre un déplacement sans friction de chaque sangle 40 lorsqu'elle est enroulée par les moyens d'enroulement.

Les moyens d'enroulement comportent, de manière similaire au mode de réalisation précédent, un rouleau 42 solidaire en rotation d'un moteur 43 (représenté symboliquement à la Fig.5) ledit moteur 43 étant du type à inversion de commande en fin de course , comme dans le mode de réalisation précédent.

Le rouleau 42 est muni de deux paires de flasques de guidage circulaires 44 disposées de manière coaxiale au rouleau, chaque flasque d'une paire étant espacée de l'autre d'une distance égale à la largeur de la sangle 40 augmentée d'un jeu.

L'écartement entre les deux paires de flasques est égal à l'écartement entre les deux sangles lorsque celles ci sont disposées dans leur orifices 38 et découpes 39.

L'ensemble comprenant les sangles 40, les moyens d'enroulement 41 et les flasques de guidage 44 constitue des moyens de traction aptes à actionner le repliement de l'écran.

Lorsque le moteur 43 entraîne en rotation le rouleau 42, les deux sangles 40 s'enroulent autour du rouleau 42, tout en étant guidées par les flasques de guidage 44. Cette action élève par traction la barre de lestage 33 qui replie l'écran 31 en une succession de parties rectangulaires 45 définies par la longueur des éléments 36 et 37 et par la largeur de l'écran 31. Ces parties rectangulaires sont reliées par des plis 46 se formant dans les intervalles séparant les éléments 36 entre eux et également dans les intervalles séparant les éléments 36 et 37. Ces plis 46 sont représentés par des bandes grisées à la Fig.6.

L'écran est ainsi forcé à se replier en zig-zag, à la manière d'une carte routière.

Le dispositif de fin de course du moteur 43 est réglé de manière que, lorsque la barre de lestage 33 est à une distance de la barre de fixation haute 32 sensiblement égale au produit de l'épaisseur d'un ourlet de l'écran 30 contenant un élément 36 ou 37 par le nombre d'éléments 36,37 se trouvant dans un ourlet de l'écran, ledit dispositif de fin de course interrompt l'action du moteur 43 et actionne un inverseur qui inverse le sens de rotation du moteur a sa prochaine mise en marche. Ainsi, lorsque le moteur se met à nouveau en rotation sous l'action d'une commande, il déroule les sangles 40. La barre de lestage 33 tire à la fois les sangles 40 et l'écran 31 vers le bas par gravité. L'écran 31 se déplie jusqu'à être complètement tendu par la barre de lestage 33. Le dispositif de fin de course du moteur 43 est réglé de manière à interrompre l'action du moteur lorsque les sangles 40 sont suffisamment déroulées pour ne plus subir la tension de la barre de lestage, celle-ci étant uniquement supportée par l'écran 30. Le dispositif de fin de course actionne un inverseur, comme précédemment. Ainsi, à la prochaine mise en marche du moteur 43, le sens de rotation du moteur fera enrouler les sangles 40.

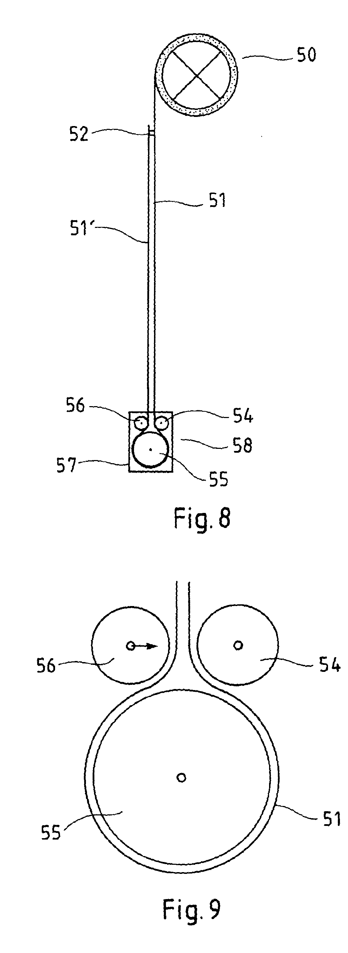

Une variante aux deux premiers modes de réalisation de l'invention prévoit un support fixe 45 (Fig. 8) s'étendant sensiblement horizontalement en arrière de l'écran 31, et un rouleau 46 disposé parallèle au rouleau 42 supporté, par exemple, par des paliers. Un bandeau 47 opaque noir, par exemple en tissu, de largeur sensiblement égale à l'écartement entre les paires de flasques 44 est fixé au rouleau 42 par une de ses extrémités. L'extrémité opposée est munie d'une barre de lestage. Dans ce cas, les moyens d'enroulement sont disposés en avant de l'écran 31.

Lorsque les sangles 40 se déroulent, le bandeau 47 se déroule également jusqu'à l'interruption de l'action du moteur. La lumière projetée sur l'écran 31 par l'avant est principalement réfléchie, comme recherché. Une partie de la lumière, cependant, traverse l'écran 31. Cette lumière est ensuite absorbée par le bandeau 47 du fait de sa couleur noire.

Ceci évite que la lumière se réfléchisse sur une surface quelconque se orificevant en arrière de l'écran 31 et vienne par transparence interférer avec l'image projetée sur l'écran 31.

Avantageusement, lorsque des sources sonores 48 sont placées en arrière de l'écran 31, le support 45 s'étend suffisamment en arrière de l'écran 31 de manière que le rouleau 46 soit disposé en arrière desdites sources sonores. Ainsi, lorsqu'il descend simultanément au déploiement de l'écran 31 , le bandeau 47 s'étend verticalement en arrière des sources sonores 48.

Lorsque les sources sonores 48 sont fixées de telle manière qu'il est impossible de faire passer le bandeau 47 en arrière des sources sonores 48, on prévoira de le réaliser en matériau acoustiquement transparent.

Un autre mode de réalisation comporte des moyens d'enroulement 50 (Fig. 9), similaires à ceux précédemment décrits .

Une bande de tissu blanc acoustiquement transparent 51 apte à réfléchir la lumière est fixée par une extrémité aux moyens d'enroulement 50 comportant, de manière classique un rouleau d'entraînement solidaire en rotation d'un moteur muni d'un dispositif de fin de course.

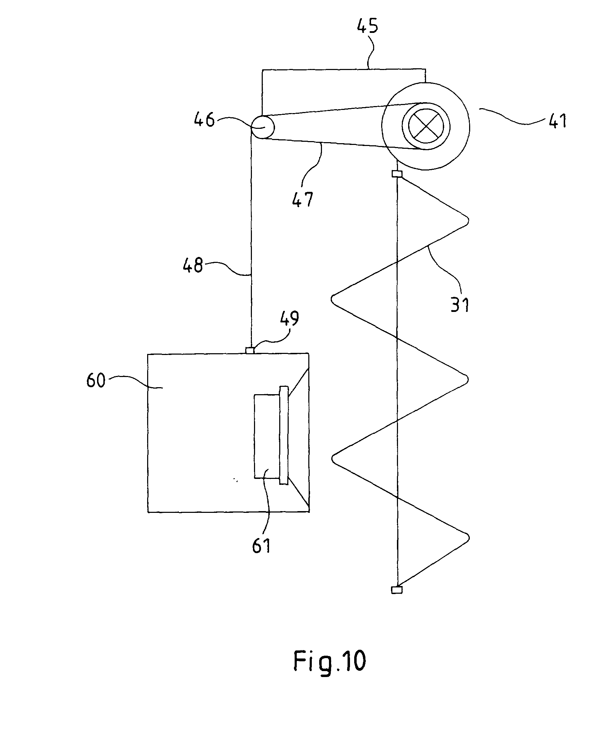

Trois rouleaux dits inférieurs 54,55,56 (Figs. 9 et 10) sont parallèles aux moyens d'enroulement 50 et sont fixés par leurs extrémités à un support 57, leurs axes formant globalement un triangle isocèle dont le sommet se trouve en bas. Un premier rouleau 54 est fixe, et un deuxième rouleau 55 dont l'axe forme le sommet dudit triangle est fixe également. Avantageusement, le deuxième rouleau est d'un diamètre supérieur au premier rouleau 54.

Un troisième rouleau 56, sensiblement de même diamètre que ledit premier rouleau 54, est connecté aux supports 57 de manière que son axe puisse se déplacer suivant une course limitée par ledit support. Des moyens élastiques (non représentés) sont prévus, tendant à rapprocher ledit troisième rouleau mobile 56 dudit premier rouleau 54. L'action desdits moyens élastiques est symbolisée par une flèche représentée à la Fig. 10.

Les rouleaux 54 et 56, en combinaison avec les moyens élastiques, constituent un moyen de serrage de deux couches de la bande de tissu 51,51' solidaire en déplacement du rouleau 55.

La partie 51' de la bande de tissu désigne celle qui remonte vers les moyens d'enroulement 50. Elle est fixée à son extrémité par une couture 52, parallèle aux moyens d'entraînement 50.

Afin de visualiser les deux couches 51 et 51' de la bande de tissu, celles-ci sont représentées séparées sur les Figs.9 et 10, étant entendu qu'elles sont en réalité jointives.

Les rouleaux 54 et 56 peuvent, en variante d'exécution de l'invention, être remplacés par tous moyens de guidage parallèles, par exemple permettant le glissement de la bande de tissu.

La combinaison de tels moyens de guidage avec des moyens élastiques les rapprochant définit lesdits moyens de serrage de deux couches de la bande de tissu 51,51'.

La bande de tissu 51,51' est disposée de manière à passer entre les premier et troisième rouleaux inférieurs 54,56, à faire le tour du deuxième rouleau inférieur 55, à passer une deuxième fois entre les premier et troisième rouleaux inférieurs 54,56, et à être fixé par son extrémité par la couture 52 à son autre partie 51, elle-même assujettie aux moyens d'enroulement 50.

L'ensemble 58 constitué par les trois rouleaux inférieurs (54,55,56) et leurs supports 57 est mobile et de masse suffisante pour tendre la bande de tissu 51 par gravité.

Lorsque les moyens d'enroulement enroulent la bande de tissu 51, 51' , la partie non enroulée se réduit, tirant l'ensemble 58 vers le haut. Le dispositif de fin de course prévu dans les moyens d'enroulement 50 est réglé de manière à interrompre l'action des moyens d'enroulement et à l'inverser à la prochaine commande lorsque l'ensemble 58 arrive à un emplacement prédéterminé , à proximité des moyens d'enroulement 50. Lorsque les moyens d'enroulement 50 déroulent la bande de tissu 51,51' celle -ci est entraînée vers le bas et tendue par la masse de l'ensemble mobile 58.

Les rouleaux 54 et 56 serrent l'une contre l'autre les deux épaisseurs 51 et 51' de la bande de manière à former un écran de projection comportant deux couches de tissu blanc, acoustiquement transparent.

Une variante complémentaire aux modes de réalisation de l'invention, comportant un support fixe 45 (Fig. 10) s'étendant sensiblement horizontalement en arrière de l'écran 30, et un rouleau 46 disposé parallèle au rouleau 42 supporté, par exemple, par des paliers. Un moyen d'entraînement en rotation du rouleau 46 comprend par exemple une courroie de transmission 47 qui solidarise en rotation le rouleau 42 avec le rouleau 46.

Avantageusement, dans ce cas, le diamètre du rouleau 46 est la moitié de celui du rouleau 42

Tout autre moyen d'entraînement du rouleau 46 peut être envisagé, son action étant synchronisée à la rotation du rouleau 42.

Une paire de sangles 48 est assujettie par une extrémité au rouleau 46, l'autre extrémité étant fixée par des moyens de fixation 49 à un dispositif de diffusion sonore 60 comportant au moins un haut-parleur 61.

De préférence, le dispositif de diffusion sonore 60 comporte trois enceintes acoustiques indépendantes réunies de manière à former un ensemble mécaniquement solidaire, apte à être déplacé verticalement par l'enroulement ou le déroulemant des sangles 48.

Lorsque le rouleau 42 enroule ou replie (suivant le mode de réalisation de l'invention) l'écran 31, il entraîne en rotation le rouleau 46 qui enroule la sangle 48, faisant ainsi monter le dispositif de diffusion sonore 60.

Inversement, lors du déploiement de l'écran 31, le rouleau 42 entraîne en rotation dans l'autre sens le rouleau 46, qui déroule les sangles 48, ce qui fait descendre le dispositif de diffusion sonore suivant une course qui est sensiblement la moitié de celle de la barre de lestage 33. Ainsi, lorsque l'écran perméable aux ondes sonores est en position déployée, le dispositif de diffusion sonore 60 se trouve en arrière de celui-ci sensiblement à mi-hauteur.

Ceci est la position la plus favorable à son bon fonctionnement.

Les modes de réalisation donnés dans la présente description sont des exemples non-limitatifs de l'invention, qui est définie par les revendications ci-après.

**Revendications**

1. Écran de projection de type rétractable, **caractérisé en ce qu'**il comporte au moins deux couches de tissu blanc transparent aux ondes acoustiques superposées et jointives.

2. Écran de projection selon la première revendication **caractérisé en ce qu'**il comporte une barre de lestage (23) apte à tendre les deux couches de tissu de manière suffisante pour compenser les différences de longueur de tissu se formant lorsqu'elles sont enroulées sur des moyens d'enroulement par différence de diamètre entre une couche dite intérieure et une couche dite extéieure qui la recouvre sur lesdits moyens d'enroulement.

3. Écran de projection selon la première revendication, **caractérisé en ce qu'**il comporte en combinaison des ourlets latéraux (35,35')contenant une pluralité d'éléments oblongs et rigides (36,37) aptes à forcer le repliement de l'écran en une succession de segments rectangulaires(45), et des moyens pour actionner le repliement de l'écran.

4. Écran de projection selon la revendication précédente, **caractérisé en ce que** lesdits moyens de pour actionner le repliement de l'écran sont des sangles (40) traversant lesdits ourlets et passant entre lesdits éléments oblongs et rigides, lesdites sangles étant enroulées sur des moyens d'enroulement.

5. Écran de projection selon la revendication 1, **caractérisé en ce qu'**il comporte en combinaison une bande de tissu (51,51')disposée suivant un chemin définissant un palan entre un moyen d'enroulement comportant au moins un rouleau fixe et au moins un rouleau mobile (55), et des moyens de serrage de deux couches de la bande de tissu.

6. Écran de projection selon la revendication précédente, **caractérisé en ce que** lesdits moyens de serrage comportent au moins deux moyens de guidage (54,56) parallèles solidaires dudit rouleau mobile (55).

7. Écran de projection selon l'une quelconque des revendication précédentes, **caractérisé en ce qu'**il comporte des moyens de descente et d'élévation d'un dispositif de diffusion sonore (60) disposé en arrière de l'écran, lesdits moyens agissant simultanément au déploiement et à l'escamotage de l'écran respectivement.

Fig. 1

Fig. 2

Fig. 3

Fig. 4

Fig.5

Fig.6

EP 1 162 499 A1

Fig.7

Fig. 8

Fig. 9

Fig.10

**Office européen des brevets**

**RAPPORT DE RECHERCHE EUROPEENNE**

Numéro de la demande

EP 01 40 1486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 510 862 A (LIEBERMAN PHILLIP L ET AL) 23 avril 1996 (1996-04-23)<br>* revendication 1; figure 1 * | 1-7 | G03B21/56<br>G03B21/58 |
| A | US 4 169 658 A (BROWN DONALD J) 2 octobre 1979 (1979-10-02)<br>* abrégé; figures 1,2 * | 1-7 | |
| A | US 3 692 384 A (KIMURA HIROSHIRE ET AL) 19 septembre 1972 (1972-09-19)<br>* revendication 1; figure 2 * | 1 | |

**DOMAINES TECHNIQUES RECHERCHES (Int.Cl.7)**

G03B

Le présent rapport a été établi pour toutes les revendications

| Lieu de la recherche | Date d'achèvement de la recherche | Examinateur |
|---|---|---|
| LA HAYE | 12 septembre 2001 | Romeo, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 01 40 1486

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-09-2001

| Document brevet cité au rapport de recherche | | Date de publication | Membre(s) de la famille de brevet(s) | | Date de publication |
|---|---|---|---|---|---|
| US 5510862 | A | 23-04-1996 | US | 5434631 A | 18-07-1995 |
| US 4169658 | A | 02-10-1979 | AUCUN | | |
| US 3692384 | A | 19-09-1972 | CA | 927158 A1 | 29-05-1973 |
| | | | DE | 2024002 A1 | 19-11-1970 |
| | | | FR | 2048445 A5 | 19-03-1971 |
| | | | GB | 1316486 A | 09-05-1973 |

EPO FORM P0460

Pour tout renseignement concernant cette annexe : voir Journal Officiel de l'Office européen des brevets, No.12/82